# EUROPEAN PATENT APPLICATION

(11) **EP 4 497 712 A1**
(43) Date of publication of application: **29.01.2025**
(21) Application number: 23774428.9
(22) Date of filing: 02.03.2023
(51) Int. Cl.: B65G 63/00, B65G 47/52, B64F 1/36

(54) **TRANSPORT SYSTEM**

(30) Priority: 23.03.2022 JP 2022047503
(71) Applicant: Daifuku Co., Ltd., Osaka-shi, Osaka 555-0012 (JP); Daifuku Oceania Limited, Auckland 0632 (NZ)
(72) Inventor: MCINNES, Alexander, Hallam, VIC 3803 (AU); MAYCOCK, Robin, 2132MX Hoofddorp (NL)
(74) Representative: Meissner Bolte Partnerschaft mbB
(86) International application number: PCT/JP2023/007765
(87) International publication number: WO 2023/181829

(57) **Abstract**

Realized is a transport system which has high reliability of transport and which is simplified. A transport system (100) includes: a check-in location (3) at which baggage (200) is checked in; a supplying device (1) which supplies, to the check-in location (3), a tray (9) on which the baggage (200) is not placed; a detecting device (33) which detects that the baggage (200) has been placed on the tray (9) at the check-in location (3); and a transporting device (2) which transports the tray (9) from the check-in location (3) toward a transport destination after detection has been made by the detecting device (33).

## Description

### Technical Field

The present invention relates to a transport system for transporting an article.

### Background Art

In airports and the like, in order to transport, to baggage loading locations, baggage which has been checked in at baggage check-in locations, transport systems in which baggage is transported by transport lines such as conveyors are provided. For example, Patent Literature 1 discloses a transport system in which baggage placed on a tray and baggage such as a suitcase are transported in a mixed manner by a conveyor. The tray disclosed in Patent Literature 1 is used to stably transport baggage which is irregularly shaped and relatively small in size, such as a backpack and a souvenir which is put in a plastic bag, a paper bag, or the like. Baggage which is relatively large in size, such as a suitcase, is transported without being placed on a tray.

### Citation List

### [Patent Literature]

### [Patent Literature 1]

Specification of European patent No. 1042199

### Summary of Invention

### Technical Problem

In recent years, in order to reliably and rapidly transport baggage, transport systems in which all pieces of baggage are transported in a state of being placed on large-sized trays have been introduced. In such a transport system, a baggage transport line which transports baggage and a tray transport line which transports a tray are individually provided, and baggage transported on the baggage transport line is removed from the baggage transport line into a tray transported on the tray transport line at a point where these transport lines are merged.

The above transport system has a problem that a complicated mechanism is required to remove baggage from the baggage transport line into a tray on the tray transport line. The above transport system also has a problem that, in a case where the baggage transport line is constituted by a belt conveyor, a failure may occur in removal when baggage becomes stuck on the belt conveyor or a timing at which baggage is removed from the belt conveyor into a tray is missed.

The object of an aspect of the present invention is to realize a transport system which has high reliability of transport and which is simplified.

### Solution to Problem

In order to attain the above object, a transport system in accordance with an aspect of the present invention includes: a check-in location at which an article is checked in; a supplying device which supplies, to the check-in location, a tray on which the article is not placed; a detecting device which detects that the article has been placed on the tray at the check-in location; and a transporting device which transports the tray from the check-in location toward a transport destination after detection has been made by the detecting device.

### Advantageous Effects of Invention

According to an aspect of the present invention, it is possible to realize a transport system which has high reliability of transport and which is simplified.

### Brief Description of Drawings

Fig. 1 is a plan view illustrating a configuration of a transport system in accordance with Embodiment 1.
Fig. 2 is a side view illustrating the configuration of the transport system.
Fig. 3 is a plan view illustrating a configuration of a tray used in each of transport systems in accordance with Embodiments 1 to 3.
Fig. 4 is a side view illustrating the configuration of the tray.
Fig. 5 is a plan view illustrating a configuration of a tub used in each of the transport systems in accordance with Embodiments 1 to 3.
Fig. 6 is a side view illustrating the configuration of the tub.
Fig. 7 is a block diagram illustrating a configuration of a control system in each of the transport systems in accordance with Embodiments 1 to 3.
Fig. 8 is a plan view illustrating a configuration of the transport system in accordance with Embodiment 2.
Fig. 9 is a side view illustrating the configuration of the transport system illustrated in Fig. 8.
Fig. 10 is a plan view illustrating a configuration of the transport system in accordance with Embodiment 3.
Fig. 11 is a side view illustrating the configuration of the transport system illustrated in Fig. 10.

### Description of Embodiments

### Embodiment 1

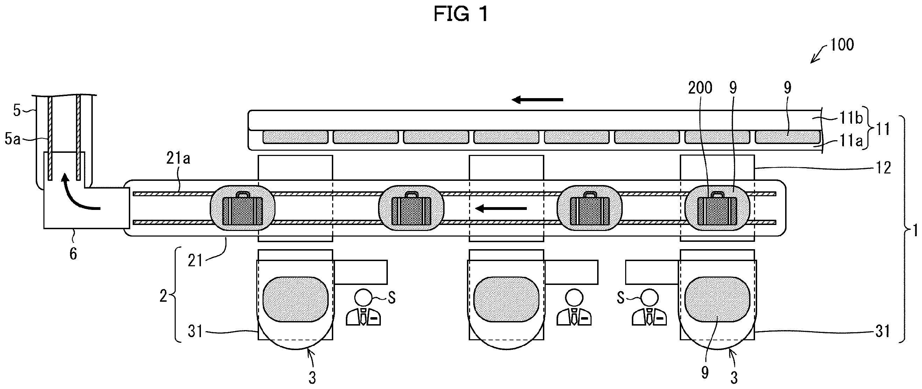

Embodiment 1 of the present invention will be described below in detail with reference to Figs. 1 to 7.

### <Configuration of transport system>

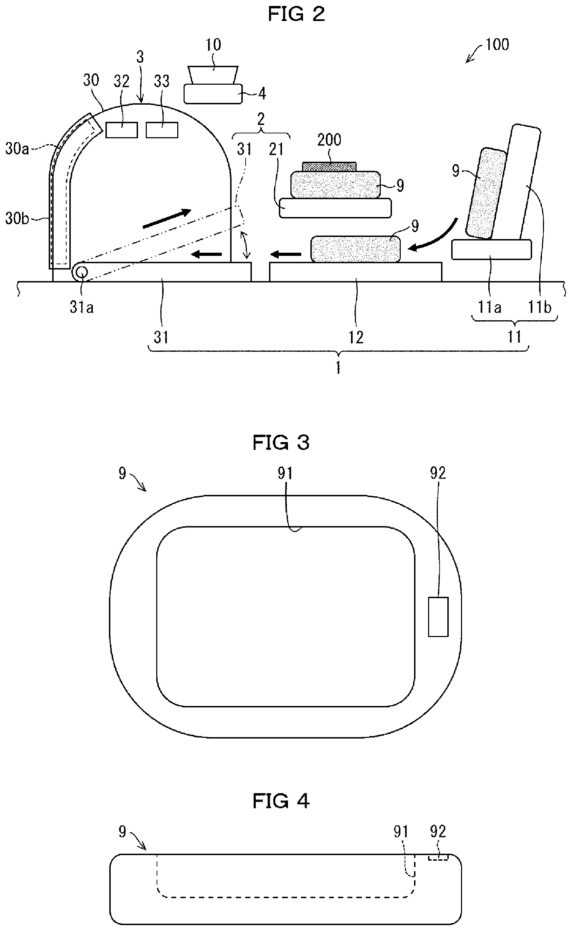

Fig. 1 is a plan view illustrating a configuration of a transport system 100 in accordance with Embodiment 1. Fig. 2 is a side view illustrating the configuration of the transport system 100.

The transport system 100 illustrated in Figs. 1 and 2 is a system which is provided in an airport and in which baggage 200 (article) is transported from a check-in location 3 to a transport destination in a state where the baggage 200 is placed on a tray 9. As illustrated in Figs. 1 and 2, the transport system 100 includes a supplying device 1, a transporting device 2, at least one check-in location 3, a tub supplying mechanism 4 (container supplying mechanism). As an example, the transport system 100 includes a plurality of check-in locations 3 (three check-in locations 3 in Fig. 1), and the plurality of check-in locations 3 are disposed so as to be spaced in a line. Note that, for convenience, illustration of the tub supplying mechanism 4 is omitted in Fig. 1.

The supplying device 1 is a device which supplies, to the check-in location 3, the tray 9 on which the baggage 200 is not placed and which is empty. The supplying device 1 includes a supplying mechanism 11, a transferring mechanism 12, and a reciprocating mechanism 31 which functions as a transferring mechanism.

The supplying mechanism 11 is a mechanism which is provided at a position that is away from the check-in location 3 and which supplies, to a supply position that is away from the check-in location 3, the tray 9 on which the baggage 200 is not placed. As an example, the supplying mechanism 11 is disposed parallel to a line along which the plurality of check-in locations 3 are disposed. The supplying mechanism 11 includes a moving part 11a and an inclined part 11b.

The moving part 11a is constituted by, for example, a belt conveyor, and moves the tray 9 in a direction of movement which direction is parallel to the line along which the plurality of check-in locations 3 are disposed. An upper surface of the moving part 11a forms a horizontal surface. The inclined part 11b is a long member which is disposed on a rear side of the upper surface of the moving part 11a (side distant from the check-in location 3) and which is formed in a wall-like shape. The inclined part 11b is disposed so as to be inclined at an angle of less than 90° with respect to the upper surface of the moving part 11a, as illustrated in, for example, Fig. 2. The tray 9 is disposed on the supplying mechanism 11 such that one side edge part of the tray 9 is in contact with the upper surface of the moving part 11a and a bottom surface of the tray 9 is in contact with a front surface of the inclined part 11b, i.e., a surface of the inclined part 11b which surface faces the check-in location 3.

The supplying mechanism 11 configured as described above supplies the tray 9 while retaining the tray 9 in a posture in which a placement surface of the tray 9 is inclined at an angle of less than 90° with respect to the horizontal surface. The angle at which the inclined part 11b is inclined is preferably an angle close to a vertical, i.e., an angle of approximately 90°.

The supplying mechanism 11 includes a retaining mechanism (not illustrated) for retaining the tray 9 in the above-described posture. The retaining mechanism is, for example, a locking piece which is provided so as to protrude from and retract into the front surface of the inclined part 11b and which locks in a hole provided in the bottom surface of the tray 9. Such a retaining mechanism is configured such that, while the tray 9 is moved, the locking piece is caused to protrude from the front surface of the inclined part 11b so as to lock in the hole of the tray 9. Meanwhile, the retaining mechanism is configured such that, when the tray 9 has reached the supply position and the supplying mechanism 11 has stopped, the locking piece is caused to retract into the front surface of the inclined part 11b so as to release locking of the tray 9 by the locking piece. When locking by the locking piece is released, the tray 9 slides down to the transferring mechanism 12 by its own weight. Note that the retaining mechanism is not limited to such a configuration, and various configurations can be employed. Note also that the transport system 100 may include a lead-in mechanism (not illustrated) which leads the tray 9 in the transferring mechanism 12. The lead-in mechanism is, for example, a lead-in conveyor. The lead-in conveyor moves the tray 9 on a roller conveyor to the transferring mechanism 12 while holding a lower end part of the tray 9.

The transferring mechanism 12 is a mechanism which transfers, to the check-in location 3, the tray 9 which has been supplied by the supplying mechanism 11, and is constituted by, for example, a belt conveyor. The transferring mechanism 12 is disposed in a route which extends from the supply position, to which the supplying mechanism 11 supplies the tray 9, to a vicinity of the check-in location 3. The transferring mechanism 12 is disposed below a transporting mechanism 21 (described later) such that at least part of the transferring mechanism 12 overlaps with the transporting mechanism 21 in a vertical direction.

The reciprocating mechanism 31 is provided to the check-in location 3. Similarly to the transferring mechanism 12, the reciprocating mechanism 31 has a function of transferring, to the check-in location 3, the tray 9 which has been supplied by the supplying mechanism 11. The reciprocating mechanism 31 will be described later in detail.

The transporting device 2 is a device which transports the tray 9 toward the transport destination from the check-in location 3 after it is detected that the baggage 200 has been placed on the tray 9 at the check-in location 3. The transporting device 2 includes the transporting mechanism 21 and the reciprocating mechanism 31 which functions as a sending-out mechanism.

The transporting mechanism 21 is a mechanism which is provided at a position that is away from the check-in location 3 and which transports, toward the transport destination, the tray 9 on which the baggage 200 is placed. As an example, the transporting mechanism 21 is disposed between the check-in location 3 and the supplying mechanism 11 so as to be parallel to the line along which the plurality of check-in locations 3 are disposed. As an example, the transporting mechanism 21 is disposed between the check-in location 3 and the supplying mechanism 11. The transporting mechanism 21 is constituted by, for example, a double-belt conveyor. Specifically, the transporting mechanism 21 includes conveyor belts 21a which are disposed on respective sides in a direction of transport and each of which has a relatively narrow width. Each of the conveyor belts 21a is driven by a drive motor via a drive roller.

The reciprocating mechanism 31 which functions as a sending-out mechanism is a mechanism which sends out, from the check-in location 3 to the transporting mechanism 21, the tray 9 on which the baggage 200 has been placed at the check-in location 3. The reciprocating mechanism 31 will be described later in detail.

The check-in location 3 indicates facilities at which the baggage 200 is checked in. As an example, the check-in location 3 is provided near a check-in counter, and a staff member S accepts checking-in of the baggage 200. The reciprocating mechanism 31, a reading-out device 32, and a detecting device 33 are provided to the check-in location 3. Note that the check-in location 3 may be constituted by a self baggage drop (SBD) which has a check-in function. This makes it unnecessary to dispose the check-in counter and the staff member S. Each of the plurality of check-in locations 3 may be manned or unmanned. Further, some of the plurality of check-in locations 3 may be manned and the other of the plurality of check-in locations 3 may be unmanned.

To the check-in location 3, an accommodating body 30 which has a box-like shape and which accommodates the tray 9 may be provided. On a front surface of the accommodating body 30, an opening 30a through which the baggage 200 is put in or taken out and a door 30b which opens and closes the opening 30a are provided. The door 30b is controlled, for example, so as to (i) open when the tray 9 is at a specified position at the check-in location 3 and (ii) close when the tray 9 is not at the specified position at the check-in location 3. By the door 30b closing, it becomes impossible for a user to enter the accommodating body 30 or put his/her hand into the accommodating body 30, during, before, and after operation of the reciprocating mechanism 31.

The reciprocating mechanism 31 is constituted by, for example, a double-belt conveyor, similarly to the transporting mechanism 21, as a conveyor which is configured to support both edges of the tray 9. As has been described, the reciprocating mechanism 31 constitutes a transferring mechanism together with the transferring mechanism 12 of the supplying device 1, and also constitutes a sending-out mechanism of the transporting device 2.

As illustrated in Fig. 2, the reciprocating mechanism 31 is configured to have two postures, i.e., (i) a horizontal posture in which the reciprocating mechanism 31 receives the tray 9 that is transferred by the transferring mechanism 12, when the reciprocating mechanism 31 functions as a transferring mechanism and (ii) an inclined posture in which the reciprocating mechanism 31 sends out the tray 9 to the transporting mechanism 21, when the reciprocating mechanism 31 functions as a sending-out mechanism. Therefore, the reciprocating mechanism 31 is provided so as to be able to rotate on a shaft 31a, and is driven by a drive device (not illustrated) so as to move between the horizontal posture and the inclined posture. Alternatively, the reciprocating mechanism 31 may be provided so as to be able to rise or fall in its entirety in the vertical direction. In this case, the reciprocating mechanism 31 has two postures, i.e., (i) a first horizontal posture in which the reciprocating mechanism 31 receives the tray 9 that is transferred by the transferring mechanism 12 and (ii) a second horizontal posture in which the reciprocating mechanism 31 is at a higher position than in the first horizontal posture and the reciprocating mechanism 31 sends out the tray 9 to the transporting mechanism 21.

The reading-out device 32 is provided so as to read out, at the check-in location 3, (i) identification information which is given to the tray 9 in advance and which is unique to the tray 9 and (ii) transport information which is given to the baggage 200 placed on the tray 9 and which indicates the transport destination. The reading-out device 32 reads out (i) the identification information from an RF tag 92 which is provided to the tray 9 that is supplied to the check-in location 3 and (ii) the transport information from a bar code which is given to the baggage 200 that is placed on the tray 9. A detailed configuration of the reading-out device 32 will be described later.

The detecting device 33 is a device which detects that the baggage 200 has been placed on the tray 9 at the check-in location 3. When the detecting device 33 detects that the baggage 200 has been placed on the tray 9, the detecting device 33 outputs a detection signal.

The detecting device 33 includes a camera which captures an image of the tray 9 from above. On the basis of the image captured by the camera, the detecting device 33 detects, by image recognition, that the baggage 200 is placed on the tray 9. The detecting device 33 is not limited to such image recognition, and may be alternatively configured, for example, such that, in a case where the weight, which has been detected by a weight sensor, of an object placed on the reciprocating mechanism 31 has a value that is equal to or higher than a given value that is higher than a value of the weight of the tray 9 which is empty, the detecting device 33 detects that the baggage 200 is placed on the tray 9.

The tub supplying mechanism 4 is a mechanism which supplies a tub 10 (described later) along a route that is different from a route along which the tray 9 is supplied. The tub supplying mechanism 4 is constituted by, for example, a belt conveyor. As an example, the tub supplying mechanism 4 is disposed in a vicinity of the check-in location 3 so as to be parallel to the transporting mechanism 21.

### <Configuration of tray and tub>

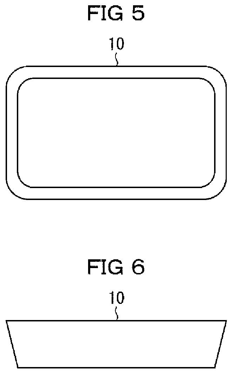

Fig. 3 is a plan view illustrating a configuration of a tray 9 used in each of the transport system 100 and transport systems 100A and 100B (described later). Fig. 4 is a side view illustrating the configuration of the tray 9. Fig. 5 is a plan view illustrating a configuration of a tub 10 used in each of the transport systems 100, 100A, and 100B. Fig. 6 is a side view illustrating the configuration of the tub 10.

As illustrated in Fig. 3, the tray 9 has a substantially elliptical shape as viewed from above. Note, however, that the shape of the tray 9 is not limited such a shape, and may be a rectangular shape. The tray 9 has a recessed part 91 in which baggage 200 that is large in size, such as a suitcase, is placed. The tray 9 also has an RF tag 92 which is attached to part of an upper edge surface of the tray 9. In the RF tag 92, identification information which is unique to the tray 9 is written.

As illustrated in Figs. 5 and 6, the tub 10 is a container which can accommodate baggage that is irregularly shaped and relatively small in size (small-sized baggage), such as a backpack and a souvenir which is put in a bag, other than the baggage 200 that is large in size. The tub 10 is sized so that the tub 10 can be accommodated in the recessed part 91 of the tray 9. The small-sized baggage is handled in the same manner as the baggage 200 by being placed on the tray 9 in a state of being accommodated in the tub 10, and is transported by the transporting device 2. In the following description, the baggage 200 includes the small-sized baggage which is placed on the tray 9 in a state of being accommodated in the tub 10.

### <Configuration of control system>

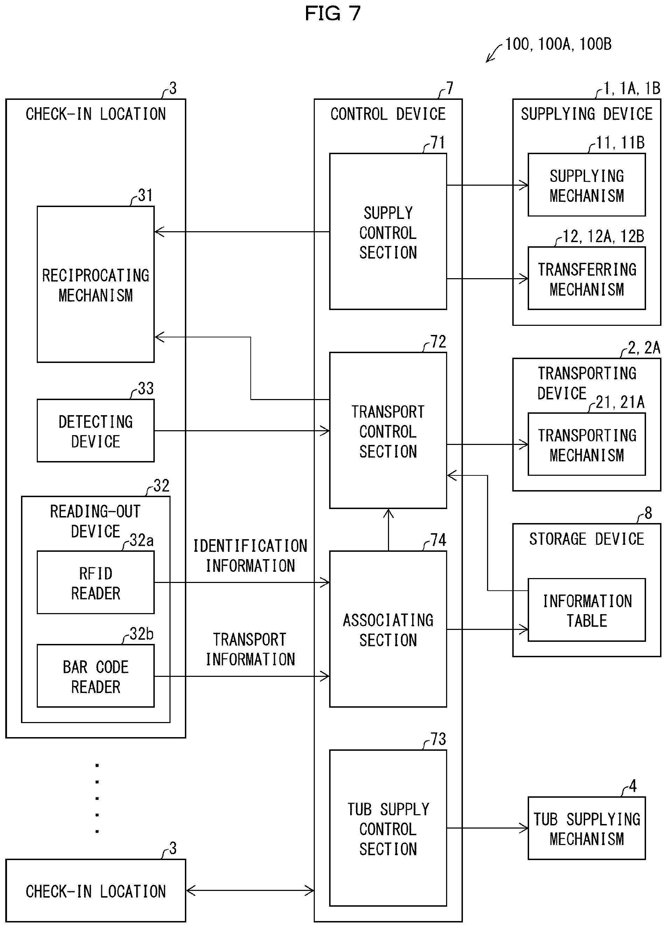

Fig. 7 is a block diagram illustrating a configuration of a control system in the transport system 100. As illustrated in Fig. 7, the transport system 100 includes a controlling device 7 and a storage device 8.

First, the reading-out device 32 which is provided to the check-in location 3 will be described. The reading-out device 32 includes a radio frequency identification (RFID) reader 32a and a bar code reader 32b.

The RFID reader 32a reads out, from the above-described RF tag 92 attached to the tray 9, the identification information concerning the tray 9. As an example, the RFID reader 32a is disposed at a position at which the RFID reader 32a can have wireless communication with the RF tag 92 in a state where the tray 9 is disposed at the check-in location 3.

The bar code reader 32b reads out a bar code shown on a baggage tag which is attached to the baggage 200. In the bar code, a flight number, a final destination, a check-in number, and the like are recorded as boarding information. The boarding information read out by the bar code reader 32b is associated, in advance, with the transport information indicating the transport destination to which the baggage 200 is to be transported. The transport destination is a sorting area in which the baggage 200 is loaded into a freight container designated for a flight to be boarded. Note that the boarding information may be recorded in, instead of the bar code, a two-dimensional code shown on the baggage tag. Alternatively, the boarding information may be recorded in an RF tag which is provided to the baggage tag and which is different from the RF tag 92. In a case where the boarding information is recorded in the two-dimensional code, the reading-out device 32 includes a two-dimensional code reader so as to read out the two-dimensional code. In a case where the boarding information is recorded in the RFID, the reading-out device 32 includes an RFID reader, which is different from the RFID reader 32a, so as to read out the RF tag.

The bar code reader 32b may read out the bar code in response to an operation conducted by the staff member S. In a case where the check-in location 3 is constituted by a self baggage drop, the bar code reader 32b may be provided to a front surface of the self baggage drop, and may read out the bar code in response to a passenger holding the bar code shown on the baggage tag over a reading-out surface of the bar code reader 32b.

Note that, instead of being read out by the bar code reader 32b, the bar code may be read out by a camera or the like provided to the check-in location 3. Alternatively, the bar code may be read out by the above-described camera provided to the detecting device 33.

The controlling device 7 is a device which controls the entire transport system 100, and is provided to, for example, a server. The storage device 8 is a device in which information necessary for control carried out by the controlling device 7 is stored, and is provided to, for example, the server together with the controlling device 7.

The controlling device 7 includes a supply control section 71, a transport control section 72, a tub supply control section 73, and an associating section 74.

The supply control section 71 controls operation of the supplying mechanism 11, the transferring mechanism 12, and the reciprocating mechanism 31 of the supplying device 1. The supply control section 71 controls the supplying mechanism 11 so that the moving part 11a of the supplying mechanism 11 moves in the direction of movement and thereby moves the tray 9 to the supply position. In response to a notification which has been outputted from the check-in location 3 and which notifies that the tray 9 on which the baggage 200 is placed has been sent out from the check-in location 3 by the transporting device 2 (sending-out notification), the supply control section 71 controls the supplying mechanism 11 so that the supplying mechanism 11 stops, and controls the transferring mechanism 12 and the reciprocating mechanism 31 so that the transferring mechanism 12 and the reciprocating mechanism 31 operate.

The associating section 74 associates the identification information which has been read out by the RFID reader 32a and the transport information which has been read out by the bar code reader 32b with each other. The associating section 74 writes, in the storage device 8 as an information table, the identification information and the transport information which have been associated with each other. The associating section 74 notifies the transport control section 72 of the fact that association between the identification information and the transport information has been completed. The controlling device 7 functions as an associating device by including the associating section 74.

The transport control section 72 controls operation of the transporting mechanism 21 and the reciprocating mechanism 31 of the transporting device 2. The transport control section 72 controls the reciprocating mechanism 31 and the transporting mechanism 21 so that the reciprocating mechanism 31 and the transporting mechanism 21 operate, upon receipt of (i) the detection signal which has been outputted from the detecting device 33 and (ii) a notification which has been outputted from the associating section 74 and which notifies that the association between the identification information and the transport information has been completed (completion notification). Further, upon receipt of the completion notification, the transport control section 72 acquires the association between the identification information and the transport information from the information table stored in the storage device 8, and notifies a managing device which manages the above-described sorting area.

### <Operation of transport system>

Next, operation of the transport system 100 configured as described above will be described below.

By the moving part 11a moving, the supplying mechanism 11 of the supplying device 1 moves the tray 9 in the direction of movement which direction is indicated by an arrow illustrated in Fig. 1. The tray 9 is placed on the supplying mechanism 11 in a state where a long side of the tray 9 is directed downward.

When the check-in location 3 outputs the sending-out notification, the supplying mechanism 11 of the supplying device 1 stops, and releases retainment of the tray 9 at the supply position. When the tray 9 is removed from the supplying mechanism 11 onto the transferring mechanism 12, the transferring mechanism 12 transfers the tray 9 toward the check-in location 3. Further, the reciprocating mechanism 31 which functions as a transferring mechanism is controlled so as to have the horizontal posture. When the reciprocating mechanism 31 receives the tray 9 from the transferring mechanism 12, the reciprocating mechanism 31 transfers the tray 9 to the specified position at the check-in location 3.

At the check-in location 3, the reading-out device 32 reads out (i) the identification information concerning the tray 9 from the RF tag 92 attached to the tray 9 and (ii) the transport information indicating the transport destination to which the baggage 200 is to be transported, and when the baggage 200 is placed on the tray 9, the detecting device 33 detects that the baggage 200 has been placed on the tray 9. In the controlling device 7, the associating section 74 associates the identification information and the transport information with each other, and the transport control section 72 controls operation of the transporting device 2 on the basis of the detection signal which has been outputted from the detecting device 33.

The reciprocating mechanism 31 which functions as a sending-out mechanism is controlled so as to have the inclined posture, and sends out, to the transporting mechanism 21, the tray 9 on which the baggage 200 is placed. When the transporting mechanism 21 accepts the tray 9 from the reciprocating mechanism 31, the transporting mechanism 21 stops transport at a position at which a region for accepting the tray 9 is reserved. The transporting mechanism 21 transports the tray 9 in the direction of transport which direction is indicated by an arrow, when the tray 9 reaches a specified transport position.

When the transporting mechanism 21 transports the tray 9 to an end position, a direction changing device 6, which changes the direction of transport, then changes orientation of the tray 9 by 90° with respect to the direction of transport carried out by the transporting mechanism 21. Thereafter, a high-speed transporting device 5 which includes a pair of belt conveyors 5a transports, to the sorting area at a high speed, the tray 9 the orientation of which has been changed.

In the sorting area, the tray 9 is inclined at a point specified by the transport information, so that the baggage 200 leaves the tray 9 by its own weight. The baggage 200 further slides down a chute to reach a vicinity of the designated freight container, and is then loaded into the freight container by an operator.

After the baggage 200 is transported, the tray 9 is stored in a given storage location, and is supplied to the check-in location 3 by the supplying device 1 as necessary.

On the other hand, the tub supplying mechanism 4 transports the tub 10. When the tub 10 is taken from the check-in location 3 as necessary, the tub supplying mechanism 4 transports the tub 10 to a position at the check-in location 3 at which position the tub 10 can be easily taken. When the tub 10 which accommodates the small-sized baggage is placed on the tray 9 at the check-in location 3, the transporting device 2 transports, toward the transport destination, the tub 10 as the baggage 200 together with the tray 9.

### <Effects of transport system>

As has been described above, the transport system 100 in accordance with Embodiment 1 includes the check-in location 3, the supplying device 1, the transporting device 2, and the detecting device 33.

This makes it possible to transport, from the check-in location 3 toward the transport destination, the tray 9 on which the baggage 200 has been placed at the check-in location 3. Thus, no mechanism is required to remove the baggage 200 into the tray 9 in the middle of transport. Therefore, since it is possible to avoid a failure in removal which failure occurs in the conventional technique, reliability of transport is increased and a system configuration is simplified, as compared with the conventional technique.

Furthermore, the orientation of the tray 9 which is supplied to the check-in location 3 by the supplying device 1, specifically, the orientation of the tray 9 which is transferred to the check-in location 3 by the transferring mechanism 12 is identical to orientation in which the tray 9 is disposed at the check-in location 3. This makes it unnecessary to adjust the orientation of the tray 9 at the check-in location 3. Therefore, it is possible to simplify the configuration of the transport system 100.

Moreover, the transporting device 2 includes the transporting mechanism 21, which is provided at the position that is away from the check-in location 3, and the reciprocating mechanism 31 (sending-out mechanism). This makes it possible to provide the transporting mechanism, which is part of the transporting device, at a position which is away from the check-in location. Therefore, it is possible to make it difficult for the user to see the transporting mechanism and make it difficult for the user to enter an area in which the transporting mechanism is provided.

The reciprocating mechanism 31 includes the double-belt conveyor. The tray 9 on which the baggage 200 is placed is sent out from the check-in location 3 by the double-belt conveyor. In this manner, the reciprocating mechanism 31 sends out the tray 9 from the check-in location 3 by the conveyor which supports the both edges of the tray 9. Thus, since the baggage 200 which is not placed on the tray 9 is not supported by the conveyor, such baggage 200 is not sent out from the check-in location 3.

The supplying device 1 includes the supplying mechanism 11, which is provided at the position which is away from the check-in location, the transferring mechanism 12, and the reciprocating mechanism 31. This makes it possible to provide the supplying mechanism 11, which is part of the supplying device 1, at a position which is away from the check-in location. Therefore, it is possible to make it difficult for the user to see the supplying mechanism 11.

The transferring mechanism 12 is disposed such that at least part of the transferring mechanism 12 overlaps with the transporting mechanism 21 in the vertical direction. This makes it possible to dispose the transferring mechanism 12 and the transporting mechanism 21 such that the transferring mechanism 12 and the transporting mechanism 21 overlap with each other in the vertical direction. Thus, it is possible to reduce an area which is occupied in a horizontal direction by the transferring mechanism 12 and the transporting mechanism 21. Therefore, it is possible to reduce the size of the transport system 100.

The supplying mechanism 11 supplies the tray while retaining the tray in a posture in which the placement surface of the tray is inclined at an angle of less than 90° with respect to the horizontal surface. This makes it possible to, in the supplying mechanism 11, supply the tray 9 in a posture in which the placement surface of the tray 9 is inclined with respect to horizontal surface. Thus, it is possible to reduce an area which is occupied in the horizontal direction by the entire supplying device 1. Therefore, it is possible to reduce the size of the transport system 100.

The controlling device 7 includes the associating section 74. This makes it possible to associate the transport information and the identification information, which have been read out at the check-in location 3, with each other. Therefore, as compared with the conventional technique in which the baggage 200 is removed into the tray 9 in the middle of transport, a process of associating the transport information and the identification information with each other is simplified.

The transport system 100 includes the tub supplying mechanism 4. This makes it possible to supply, to the check-in location 3, the tub 10 which can accommodate the small-sized baggage, separately from the tray 9.

### Embodiment 2

The following description will discuss Embodiment 2 of the present invention with reference to Figs. 7 through 9. Note that, for convenience, constituent elements which have functions equivalent to those of the constituent elements described in Embodiment 1 will be given respective identical reference signs and will not be described below. In Embodiment 2, configurations which differ from those described in Embodiment 1 and their operation will be mainly described.

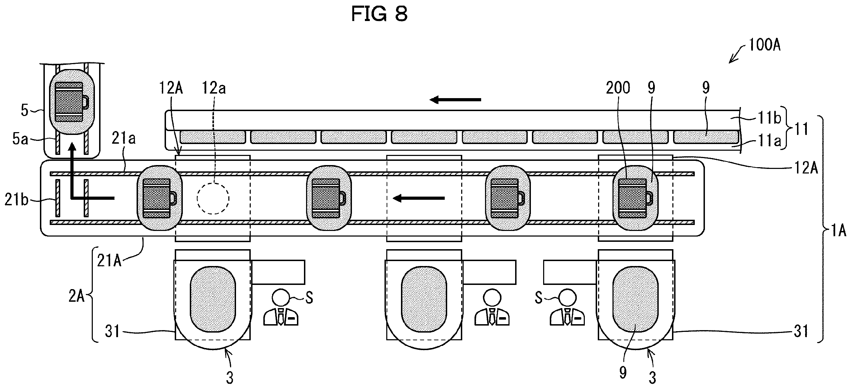

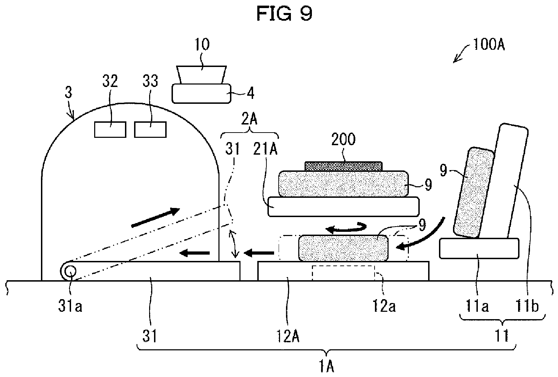

Fig. 7 is a block diagram illustrating a configuration of a control system in a transport system 100A. Fig. 8 is a plan view illustrating a configuration of the transport system 100A in accordance with Embodiment 2. Fig. 9 is a side view illustrating the configuration of the transport system 100A.

As illustrated in Figs. 8 and 9, the transport system 100A includes a supplying device 1A, a transporting device 2A, a check-in location 3, and a tub supplying mechanism 4.

The supplying device 1A includes a supplying mechanism 11, a transferring mechanism 12A, and a reciprocating mechanism 31 which functions as a transferring mechanism. The transferring mechanism 12A includes a turning mechanism 12a. The turning mechanism 12a is a mechanism which changes orientation of a tray 9 which has been removed from the supplying mechanism 11 onto the turning mechanism 12a, to orientation in which the tray 9 is disposed at the check-in location 3. The transferring mechanism 12A transfers, to the check-in location 3, the tray 9 the orientation of which has been changed by the turning mechanism 12a. The turning mechanism 12a may be, for example, a mechanism which lifts and rotates the tray 9 to change the orientation of the tray 9 by 90° and then lowers the tray 9 or may be constituted by another known mechanism.

The transporting device 2A includes a transporting mechanism 21A and the reciprocating mechanism 31 which functions as a sending-out mechanism. Unlike the above-described transporting device 2, the transporting mechanism 21A transports the tray 9 in a state where the orientation of the tray 9 is such that a direction of a short side (short axis) of the tray 9 matches a direction of transport carried out by the transporting mechanism 21A. For this reason, an interval between conveyor belts 21a which constitute a double-belt conveyor included in the transporting mechanism 21A is longer than an interval between the conveyor belts 21a included in the transporting mechanism 21.

As illustrated in Fig. 7, a supply control section 71 of a controlling device 7 controls operation of the transferring mechanism 12A, including the turning mechanism, so that the transferring mechanism 12A transfers the tray 9 and changes the orientation of the tray 9.

In the transport system 100A configured as described above, the tray 9 the orientation of which has been changed by the turning mechanism 12a is transferred to the check-in location 3 by the reciprocating mechanism 31 in a state where the orientation of the tray 9 is kept as it is. At the check-in location 3, when baggage 200 is placed on the tray 9, the tray 9 is sent out to the transporting mechanism 21A by the reciprocating mechanism 31 which functions as a sending-out mechanism. The transporting mechanism 21A then transports the tray 9 toward a transport destination in a state where the orientation of the tray 9 has been changed. Thus, according to the transport system 100A, it is possible to transfer the tray 9 to the check-in location 3 after the orientation of the tray 9 is appropriately adjusted.

Furthermore, the transporting mechanism 21A includes, at an end part thereof, a pair of conveyor belts 21b which constitute, for example, a double-belt conveyor. The conveyor belts 21b are disposed so as to extend in a direction perpendicular to a direction of the conveyor belts 21a, as an example. This makes it possible for the transporting mechanism 21A to change the direction of transport toward a high-speed transporting device 5.

### Embodiment 3

The following description will discuss Embodiment 3 of the present invention with reference to Figs. 7, 10, and 11. Note that, for convenience, constituent elements which have functions equivalent to those of the constituent elements described in Embodiments 1 and 2 will be given respective identical reference signs and will not be described below. In Embodiment 3, configurations which differ from those described in Embodiments 1 and 2 and their operation will be mainly described.

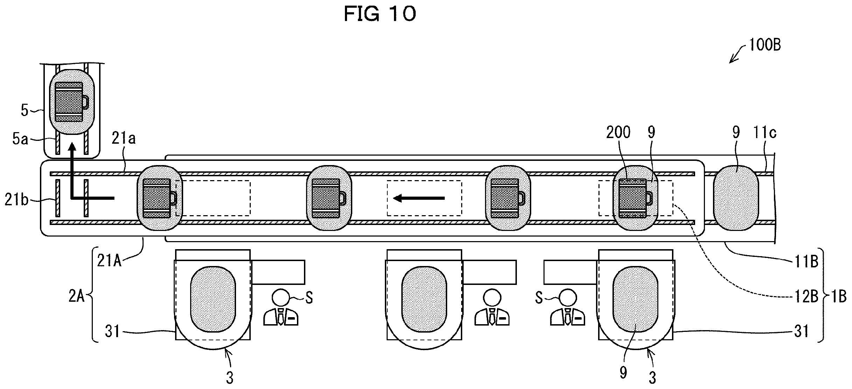

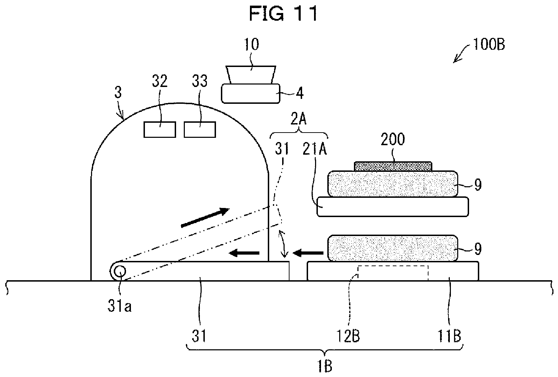

Fig. 7 is a block diagram illustrating a configuration of a control system in a transport system 100B. Fig. 10 is a plan view illustrating a configuration of the transport system 100B in accordance with Embodiment 3. Fig. 11 is a side view illustrating the configuration of the transport system 100B.

As illustrated in Figs. 10 and 11, the transport system 100B includes a supplying device 1B, a transporting device 2A, a check-in location 3, and a tub supplying mechanism 4.

The supplying device 1B includes a supplying mechanism 11B, a transferring mechanism 12B, and a reciprocating mechanism 31 which functions as a transferring mechanism. As an example, the supplying mechanism 11B is disposed below a transporting mechanism 21A such that the supplying mechanism 11B overlaps with the transporting mechanism 21A in a vertical direction. Similarly to the transporting mechanism 21A, the supplying mechanism 11B is constituted by, for example, a double-belt conveyor, and includes a pair of conveyor belts 11c. An interval between the conveyor belts 11c is identical to an interval between conveyor belts 21a.

As an example, the transferring mechanism 12B is disposed between the pair of conveyor belts 11c included in the supplying mechanism 11B. The transferring mechanism 12B includes a plurality of rollers (not illustrated). By the plurality of rollers rolling, a tray 9 is transferred toward the check-in location 3.

As illustrated in Fig. 7, a supply control section 71 of a controlling device 7 controls operation of the supplying mechanism 11B and the transferring mechanism 12B. When the tray 9 is moved to a supply position, the supply control section 71 controls the operation of the supplying mechanism 11B and the transferring mechanism 12B so that the supplying mechanism 11B moves and the plurality of rollers of the transferring mechanism 12B stand by at a lower position at which the plurality of rollers do not come into contact with a lower edge surface of the tray 9. On the other hand, when the tray 9 is transferred, the supply control section 71 controls the operation of the supplying mechanism 11B and the transferring mechanism 12B so that the supplying mechanism 11B stops and the plurality of rollers rise from such a stand-by position to a position at which the plurality of rollers come into contact with the lower edge surface of the tray 9 and then roll.

In the transport system 100B configured as described above, the tray 9 which has been supplied by the supplying mechanism 11B is transferred to the check-in location 3 by the reciprocating mechanism 31 in a state where orientation of the tray 9 is unchanged. At the check-in location 3, when baggage 200 is placed on the tray 9, the tray 9 is sent out to the transporting mechanism 21A by the reciprocating mechanism 31 which functions as a sending-out mechanism. The transporting mechanism 21A then transports the tray 9 toward a transport destination in a state where the orientation of the tray 9 is unchanged from the orientation at a time when the tray 9 is supplied.

As has been described, in the transport system 100B, the supplying device 1B includes the supplying mechanism 11B which supplies the tray 9 in a horizontal direction. The transferring mechanism 12B is disposed in the supplying mechanism 11B. This makes it possible to reduce the size of the transport system 100B.

Moreover, in the transport system 100B, the supplying device 1B is disposed such that at least part of the supplying device 1B overlaps with at least the transporting mechanism 21A of the transporting device 2A in the vertical direction. This makes it possible to dispose the supplying device 1B and the transporting mechanism 21A such that the supplying device 1B and the transporting mechanism 21A overlap with each other in the vertical direction. This makes it possible to reduce an area which is occupied in the horizontal direction by the supplying device 1B and the transporting mechanism 21A. Therefore, it is possible to further reduce the size of the transport system 100B.

### [Software Implementation Example]

Functions of each of the transport systems 100, 100A, and 100B (hereinafter, referred to as collectively "transport system") are realized by a program for causing a computer to function as the transport system. The functions can be realized by a program for causing a computer to function as control blocks (particularly, each section of the controlling device 7) of the transport system.

In this case, the transport system includes, as hardware for executing the program, a computer which includes (i) a processor and the like which constitute the controlling device 7 and (ii) a memory and the like which constitute at least one storage device 8. By the controlling device 7 and the storage device 8 executing the program, the functions described in each of the foregoing embodiments are realized.

The program may be stored in one or more non-transitory and computer-readable storage media. The one or more storage media may or may not be provided to the transport system. In the latter case, the program may be supplied to or made available to the transport system via any transmission medium by wire or wireless.

Further, some or all of functions of the respective control blocks can be realized by a logic circuit. For example, the present invention encompasses, in its scope, an integrated circuit in which a logic circuit that functions as each of the control blocks is formed. Alternatively, the functions of the respective control blocks can be realized, for example, by a quantum computer.

Aspects of the present invention can also be expressed as follows:
A transport system in accordance with an aspect of the present invention is a transport system including: a check-in location at which an article is checked in; a supplying device which supplies, to the check-in location, a tray on which the article is not placed; a detecting device which detects that the article has been placed on the tray at the check-in location; and a transporting device which transports the tray from the check-in location toward a transport destination after detection has been made by the detecting device.

According to the above configuration, it is possible to transport, from the check-in location toward the transport destination, the tray on which the article has been placed at the check-in location. Thus, no mechanism is required to remove the article into the tray in the middle of transport. Therefore, since it is possible to avoid a failure in removal which failure occurs in the conventional technique, reliability of transport is increased and a system configuration is simplified, as compared with the conventional technique.

In the transport system, orientation of the tray which is supplied to the check-in location by the supplying device is identical to orientation in which the tray is disposed at the check-in location.

According to the above configuration, it is unnecessary to adjust the orientation of the tray at the check-in location. This makes it possible to simplify the configuration of the transport system.

In the transport system, the transporting device includes: a transporting mechanism which is provided at a position that is away from the check-in location and which transports, toward the transport destination, the tray on which the article is placed; and a sending-out mechanism which sends out, from the check-in location to the transporting mechanism, the tray on which the article has been placed at the check-in location.

According to the above configuration, it is possible to provide the transporting mechanism, which is part of the transporting device, at the position that is away from the check-in location. Therefore, it is possible to make it difficult for a user to see the transporting mechanism or make it difficult for the user to enter an area in which the transporting mechanism is provided.

In the transport system, the supplying device is disposed such that at least part of the supplying device overlaps with at least the transporting mechanism of the transporting device in a vertical direction.

According to the above configuration, it is possible to dispose the supplying device and the transporting mechanism such that the supplying device and the transporting mechanism overlap with each other in the vertical direction. This makes it possible to reduce an area which is occupied in a horizontal direction by the supplying device and the transporting mechanism. Therefore, it is possible to reduce the size of the transport system.

In the transport system, the sending-out mechanism includes a conveyor which is configured to support both edges of the tray, and the sending-out mechanism sends out, from the check-in location by the conveyor, the tray on which the article is placed.

According to the above configuration, the sending-out mechanism sends out the tray from the check-in location by the conveyor which supports the both edges of the tray. Thus, since the article which is not placed on the tray is not supported by the conveyor, such article is not sent out from the check-in location.

In the transport system, wherein the supplying device includes: a supplying mechanism which is provided at a position that is away from the check-in location and which supplies, to a supply position that is away from the check-in location, the tray on which the article is not placed; and a transferring mechanism which transfers, to the check-in location, the tray which has been supplied by the supplying mechanism.

According to the above configuration, it is possible to provide the supplying mechanism, which is part of the supplying device, at the position that is away from the check-in location. Therefore, it is possible to make it difficult for the user to see the supplying mechanism.

In the transport system, the transferring mechanism includes a turning mechanism which changes orientation of the tray which has been supplied by the supplying mechanism, to orientation in which the tray is disposed at the check-in location, and the transferring mechanism transfers, to the check-in location, the tray the orientation of which has been changed by the turning mechanism.

According to the above configuration, it is possible to transfer the tray to the check-in location after the orientation of the tray is appropriately adjusted.

In the transport system, the transferring mechanism is disposed such that at least part of the transferring mechanism overlaps with the transporting mechanism in a vertical direction.

According to the above configuration, it is possible to dispose the transferring mechanism and the transporting mechanism such that the transferring mechanism and the transporting mechanism overlap with each other in the vertical direction. This makes it possible to reduce an area which is occupied in the horizontal direction by the transferring mechanism and the transporting mechanism. Therefore, it is possible to reduce the size of the transport system.

In the transport system, the supplying mechanism supplies the tray while retaining the tray in a posture in which a placement surface of the tray is inclined at an angle of less than 90° with respect to a horizontal surface.

According to the above configuration, since it is possible for the supplying mechanism to supply the tray in the posture in which the placement surface of the tray is inclined with respect to the horizontal surface, it is possible to reduce an area which is occupied in the horizontal direction by the entire supplying device. This makes it possible to reduce the size of the transport system.

The transport system further includes: one or more reading-out devices each of which reads out, at the check-in location, (i) identification information that is given to the tray in advance and that is unique to the tray and (ii) transport information which is given to the article placed on the tray and which indicates the transport destination; and an associating device which associates the identification information and the transport information each of which has been read out with each other.

According to the above configuration, it is possible to associate the transport information and the identification information, which have been read out at the check-in location, with each other. Therefore, as compared with the conventional technique in which the article is removed into the tray in the middle of transport, a process of associating the transport information and the identification information with each other is simplified.

The transport system further includes a container supplying mechanism which supplies, to the check-in location, a container which can accommodate the article and which can be placed on the tray.

According to the above configuration, it is possible to supply, to the check-in location, the container which can accommodate the article, separately from the tray.

In the transport system, the check-in location includes an accommodating body which accommodates the tray, the accommodating body includes: an opening through which the article is put in or taken out from the accommodating body; and a door which opens and closes the opening, and the door is controlled so as to open when the tray is at a specified position at the check-in location.

According to the above configuration, it is possible to prevent a user from entering the accommodating body or putting his/her hand into the accommodating body, during, before, and after operation of a reciprocating mechanism.

### [Supplementary note]

The present invention is not limited to the embodiments, but can be altered by a skilled person in the art within the scope of the claims. The present invention also encompasses, in its technical scope, any embodiment derived by combining technical means disclosed in differing embodiments.

### Reference Signs List

1, 1A, 1B Supplying device
1A Supplying device (turning mechanism)
2, 2A Transporting device
3 Check-in location
4 Tub supplying mechanism (container supplying mechanism)
7 Control device (associating device)
9 Tray
10 Tub (container)
11, 11B Supplying mechanism
12, 12A, 12B Transferring mechanism
12a Turning mechanism
30 Accommodating body
30a Opening
30b Door
31, 31A Reciprocating mechanism (transferring mechanism, sending-out mechanism)
32 Reading-out device
33 Detecting device
100, 100A, 100B Transport system
200 Baggage (article)

## Claims

1. A transport system comprising:
a check-in location at which an article is checked in;
a supplying device which supplies, to the check-in location, a tray on which the article is not placed;
a detecting device which detects that the article has been placed on the tray at the check-in location; and
a transporting device which transports the tray from the check-in location toward a transport destination after detection has been made by the detecting device.

2. The transport system as set forth in claim 1, wherein orientation of the tray which is supplied to the check-in location by the supplying device is identical to orientation in which the tray is disposed at the check-in location.

3. The transport system as set forth in claim 1 or 2, wherein
the transporting device includes:
a transporting mechanism which is provided at a position that is away from the check-in location and which transports, toward the transport destination, the tray on which the article is placed; and
a sending-out mechanism which sends out, from the check-in location to the transporting mechanism, the tray on which the article has been placed at the check-in location.

4. The transport system as set forth in claim 3, wherein the supplying device is disposed such that at least part of the supplying device overlaps with at least the transporting mechanism of the transporting device in a vertical direction.

5. The transport system as set forth in claim 3 or 4, wherein
the sending-out mechanism includes a conveyor which is configured to support both edges of the tray, and
the sending-out mechanism sends out, from the check-in location by the conveyor, the tray on which the article is placed.

6. The transport system as set forth in any one of claims 3 through 5, wherein
the supplying device includes:
a supplying mechanism which is provided at a position that is away from the check-in location and which supplies, to a supply position that is away from the check-in location, the tray on which the article is not placed; and
a transferring mechanism which transfers, to the check-in location, the tray which has been supplied by the supplying mechanism.

7. The transport system as set forth in claim 6, wherein
the transferring mechanism includes
a turning mechanism which changes orientation of the tray which has been supplied by the supplying mechanism, to orientation in which the tray is disposed at the check-in location, and
the transferring mechanism transfers, to the check-in location, the tray the orientation of which has been changed by the turning mechanism.

8. The transport system as set forth in claim 6 or 7, wherein the transferring mechanism is disposed such that at least part of the transferring mechanism overlaps with the transporting mechanism in a vertical direction.

9. The transport system as set forth in any one of claims 6 through 8, wherein the supplying mechanism supplies the tray while retaining the tray in a posture in which a placement surface of the tray is inclined at an angle of less than 90° with respect to a horizontal surface.

10. The transport system as set forth in any one of claims 1 through 9, further comprising:
one or more reading-out devices each of which reads out, at the check-in location, (i) identification information that is given to the tray in advance and that is unique to the tray and (ii) transport information which is given to the article placed on the tray and which indicates the transport destination; and
an associating device which associates the identification information and the transport information each of which has been read out with each other.

11. The transport system as set forth in any one of claims 1 through 10, further comprising
a container supplying mechanism which supplies, to the check-in location, a container which can accommodate the article and which can be placed on the tray.

12. The transport system as set forth in any one of claims 1 through 11, wherein
the check-in location includes an accommodating body which accommodates the tray,
the accommodating body includes:
an opening through which the article is put in or taken out from the accommodating body; and
a door which opens and closes the opening, and
the door is controlled so as to open when the tray is at a specified position at the check-in location.
